Europäisches Patentamt

**European Patent Office**

Office européen des brevets

(11) Numéro de publication: **0 046 562**
A1

## (12) DEMANDE DE BREVET EUROPEEN

(21) Numéro de dépôt: **81106382.5**

(22) Date de dépôt: **17.08.81**

(51) Int. Cl.³: **B 60 L 5/16**
**B 60 L 5/36**

(30) Priorité: **22.08.80 FR 8018409**

(43) Date de publication de la demande:
**03.03.82 Bulletin 82/9**

(84) Etats contractants désignés:
**AT BE CH DE FR GB IT LI LU NL SE**

(71) Demandeur: **Transports Recherches Etudes Groupement d'Intérêt Economique (T.R.E.G.I.E.) 147 avenue Paul-Doumer F-92500 Rueil Malmaison(FR)**

(72) Inventeur: **Michel, Robert 12, rue de la Jonquière F-75017 Paris(FR)**

(74) Mandataire: **Casalonga, Axel et al, BUREAU D.A. CASALONGA OFFICE JOSSE & PETIT Lilienstrasse 77 D-8000 München 80(DE)**

(54) **Dispositif d'emperchage automatique pour trolleybus.**

(57) L'invention consiste, sur un trolleybus comportant deux perches classiques (3) avec embases pivotantes (2), ressorts de levée et vérins de déperchage, avec également les rattrape-trolley (6) classiques, à ajouter une troisième perche (10), ou perche de manoeuvre, intercalée entre les deux précédentes et d'une réalisation sensiblement semblable à celle des perches normales, cette perche de manoeuvre comportant à son extrémité supérieure un mécanisme (11) destiné à saisir les deux perches normales (3) lorsqu'elles sont en position basse, à les élever lentement et à les positionner sous les câbles d'alimentation, puis à les libérer pour lui permettre de revenir se positionner seule en position basse, grâce à quoi le trolleybus (1) peut circuler avec uniquement ses perches normales (3) et ses rattrapes-trolley normaux (6), toutes les pièces additionnelles (8, 10, 11) étant hors service au moment de la circulation.

./...

FIG.1

Dispositif d'emperchage automatique pour trolleybus.

L'invention concerne l'opération d'èmperchage, c'est-à-dire de mise en place des perches des trolleybus sous les câbles d'alimentation.

D'une manière usuelle, les perches des trolleybus sont amenées en position sous les deux lignes d'alimentation par l'action du conducteur qui agit au moyen des cordes de rappel utilisées par les dispositifs de rattrapage automatique des perches, dispositifs qui sont d'un emploi absolument généralisé. Cette manoeuvre oblige le conducteur à quitter son poste de conduite et devient intolérable s'il s'agit d'un véhicule destiné à quitter fréquemment la ligne, comme c'est le cas des trolleybus pourvus d'une autonomie thermique ou électrique.

Pour cette raison, il a déjà été réalisé des dispositifs d'emperchage automatique mais dont très peu sont en service. Ces dispositifs mettent en oeuvre des actuateurs situés au niveau des embases de perche et qui leur permettent de diriger l'ascension et le positionnement latéral des perches par rapport aux câbles lors de l'approche.

Ces actuateurs sont soit dirigés par des signaux émis par la ligne et reçus par des détecteurs de champ, soit commandés par des ordres donnés par le conducteur depuis son poste de pilotage, ou encore asservis en position suivant une séquence préalablement enregistrée par le conducteur en fonction d'une position précise du trolleybus par rapport au sol.

Toutefois cette manoeuvre d'approche n'est pas suffisamment précise pour positionner les sabots de contact sur les fils et elle est toujours complètée par des détecteurs portés par les sabots et venant palper la ligne afin d'assurer la séquence automatique finale pour la mise en place des perches sur les fils.

Ces dispositifs ont pour inconvénients :
- de modifier le comportement dynamique des perches par le fait que les actuateurs qui leur sont accouplés augmentent leur inertie ;

- de ne pas pouvoir s'adapter simplement à différentes tailles de perches;
- d'être très onéreux par le nombre d'actuateurs, chacun constitué généralement d'un moteur électrique 24 Volts continu, d'un réducteur très démultiplié et d'un amplificateur de commande;
- de ne pouvoir opérer efficacement les reprises de perches en cas de déperchage accidentel par le fait que ces mécanismes ne sont pas compatibles avec les rattrape-trolley classiques;
- de nécessiter des modifications des têtes de perches par l'apport d'antennes qui ne sont pas sans inconvénient et qui excluent les têtes dites oscillantes;
- enfin pour le dispositif à positionnement pré-enregistré, d'être très critique au point de vue du réglage de hauteur en raison de la flexibilité des perches, des variations d'altitude des fils au cours de la journée sous l'effet de la température, ainsi que des variations de la charge du véhicule.

Le but de l'invention est d'éliminer les inconvénients précédents, c'est-à-dire en particulier de réaliser un dispositif d'emperchage automatique qui respecte les conditions de fonctionnement habituel des perches et permet en conséquence d'utiliser en toute sécurité les rattrapes-trolley habituels éprouvés par l'usage.

L'invention consiste, sur un trolleybus comportant deux perches classiques avec embases pivotantes, ressorts de levée et vérins de déperchage, avec également les rattrape-trolley classiques, à ajouter une troisième perche, ou perche de manoeuvre, intercalée entre les deux précédentes et d'une réalisation sensiblement semblable à celle des perches normales, cette perche de manoeuvre comportant à son extrémité supérieure un mécanisme destiné à saisir les deux perches normales lorsqu'elles sont en position basse, à les élever lentement et à les positionner sous les câbles d'alimentation, puis à les libérer pour lui permettre de revenir se positionner seule en position basse, grâce à quoi le trolleybus peut circuler avec uniquement ses perches normales et ses rattrape-trolley normaux, toutes les pièces additionnelles étant hors service au moment de la circulation.

Le mécanisme de manoeuvre des perches situé à l'extrémité de la perche de manoeuvre est consitué avantageusement par un quadrilatère articulé en matériau isolant, articulé à rotule autour de la perche de manoeuvre et maintenu dans un plan sensiblement horizontal par une tringle de parallélisme renvoyée sur l'embase de la perche de manoeuvre, ce quadrilatère comportant à chacune de ses extrémités latérales un dispositif d'accouplement permettant de se verrouiller automatiquement sur la tête d'une perche normale et susceptible d'être déverrouillé par une commande appropriée, le quadrilatère étant par ailleurs susceptible de s'expanser latéralement en écartant les deux dispositifs de verrouillage sous l'effet d'un ressort de rappel, et également de se rétracter sous l'effet d'une autre commande appropriée combinée avec la précédente, lesdits dispositifs de déverrouillage comportant d'autre part des antennes de bûtée latérale, d'orientation et de détection de présence du câble faisant saillie au-dessus du plan du quadrilatère.

La séquence opératoire est alors la suivante :
- levée de l'ensemble des trois perches accouplées, en même temps qu'a lieu une orientation approximative de la perche de positionnement par un actionneur agissant sur l'embase mais avec une précision relativement faible;
- application du quadrilatère en position expansée sous les deux câbles jusqu'à l'appui, puis rétraction du quadrilatère jusqu'à ce que les détecteurs des deux dispositifs d'accouplement soient venus en butée sur les câbles, la continuation du mouvement produisant alors la libération des perches normales par ces dispositifs d'accouplement;

- enfin retour de la perche de manoeuvre et de son quadrilatère en position basse de repos.

D'autres particularités de l'invention apparaîtront dans
la description qui va suivre d'un mode de réalisation
pris comme exemple et représenté sur un dessin annexé sur
lequel :

- la figure 1 est une vue de dessus de l'ensemble des
perches,

- la figure 2 est une vue en élévation de la perche de
manoeuvre,

- la figure 3 est une vue partielle en bout du quadrilatère
et des extrémités des trois perches,

- la figure 4 représente à plus grande échelle un exemple
de réalisation du dispositif d'accouplement de la figure
3,

- la figure 5 est une vue de face du dispositif de la
figure 4.

L'invention consistant essentiellement à combiner un dispositif de perches classiques à commande manuelle avec un
dispositif de manoeuvre rendant celui-ci automatique,
mais sans interférer aucunement sur son fonctionnement,
il convient tout naturellement de d'écrire le premier de
ces dispositifs en rappelant son fonctionnement, puis
d'exposer le second dispositif et son action sur le
premier.

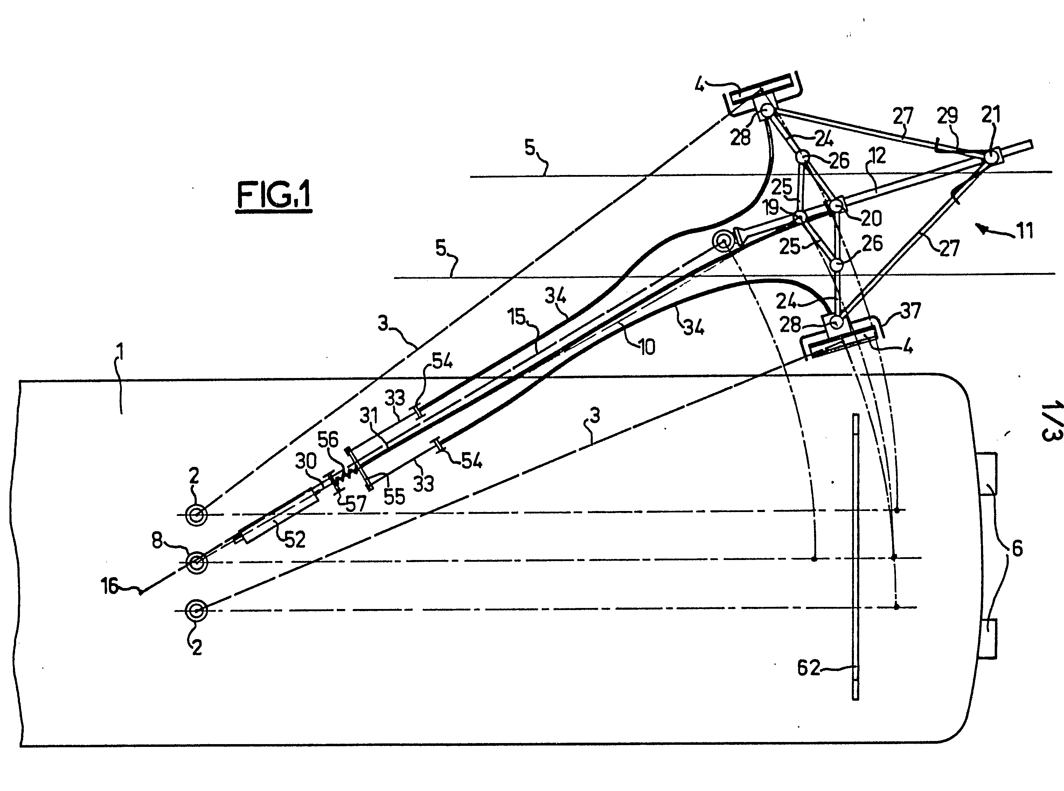

Le trolleybus 1 comporte sur son pavillon deux embases
pivotantes 2 pour les deux perches de captage habituelles non
représentées en détail et désignées simplement par leur tracé
3 sur la figure 1.

Chacune des perches 3 est articulée autour d'un axe horizontal sur son embase 2, laquelle embase 2 peut tourner librement autour d'un axe vertical.

A l'autre extrémité de chacune des perches est articulé
le sabot de trolley 4 destiné à venir s'emboîter sur un des
deux câbles 5 de la ligne d'alimentation pour assurer le
captage du courant.

Les sabots 4 sont toujours articulés autour d'un axe vertical par rapport à l'extrémité de la perche 3, afin de permettre le déport latéral du trolleybus 1 qui n'est pas astreint à rester à l'aplomb des lignes 5, et en outre les sabots 4 sont souvent également articulés autour d'un axe horizontal transversal pour permettre un fonctionnement correct avec diverses hauteurs de ligne.

Pour assurer le contact électrique des deux sabots 4 sous le fil correspondant 5, il est prévu naturellement un puissant ressort de rappel entre chacune des perches 3 et l'embase 2 correspondante, ressort qui produit le soulèvement de la perche et qui est taré de manière à obtenir la force d'application voulue du sabot sous le fil 5, généralement d'environ 15 Kg.

A l'arrière du véhicule sont disposés d'autre part les deux rattrape-trolley classiques 6, réunis chacun par un cordage textile à la tête 7 de la perche correspondante.

On rappelle que chacun des rattrape-trolley comporte un tambour d'enroulement de ce cordage et deux ressorts, dont l'un relativement léger assure en permanence une faible tension du cordage, et l'autre, beaucoup plus puissant armé à l'aide d'une manivelle, constitue une réserve d'énergie.

Si au cours de la circulation du véhicule un des sabots 4 vient à se déboîter d'en dessous le fil de ligne 5 correspondant, la perche risque, en se levant brusquement, d'endommager les lignes et leurs supports.

Dans ce cas, le brusque déplacement vers le haut de la perche dès qu'il est amorcé provoque une brusque rotation du tambour dans le sens du déroulement, rotation qui est détectée par un mécanisme approprié, lequel se déclenche et assure la mise en rotation rapide du tambour dans le sens de l'enroulement en libérant l'énergie accumulée dans le deuxième ressort. Cela à donc pour effet de ramener la perche défaillante sur le toit du véhicule afin d'éviter tout accident.

Le conducteur peut également assurer manuellement le déperchage en tirant simplement sur les cordages textiles des rattrape-trolley, mais dans le cas où le trolleybus est doté d'une certaine autonomie thermique ou électrique, il est généralement prévu un verin à air comprimé sur chacune des embases de perches pour permettre de commander depuis le poste de conduite le retour de la perche en position basse, ou un dispositif de recentrage et de verrouillage approprié, non représenté, vient la recevoir.

L'ensemble ainsi décrit existe déjà en un nombre élevé d'exemplaires qui fonctionnent en toute sécurité sous commande manuelle.

C'est ce mécanisme éprouvé par l'usage que l'invention se propose de rendre automatique sans en perturber le fonctionnement ni la sécurité.

Pour cela, et conformément à l'invention, on ajoute entre les deux embases de perche 2, une troisième embase pivotante 8 de conception tout à fait identique aux précédentes et sur laquelle s'articule, autour d'un axe horizontal 9, l'extrémité inférieure d'une troisième perche 10, ou perche de manoeuvre, portant à son extrémité supérieure le mécanisme de manoeuvre 11.

Ce mécanisme 11 comporte une coulisse 12, constituée par exemple par deux tiges cylindriques parallèles solidaires entre elles, cette coulisse étant articulée au moyen d'une rotule 13 à l'extrémité supérieure de la perche 10. La coulisse 12 se prolonge vers l'avant au-delà de la rotule 13 et comporte à son extrémité une autre articulation à rotule 14, sur laquelle s'articule une tringle de parallèlisme 15, qui est elle-même articulée à son extrémité inférieure en 16 à l'extrémité d'une potence 17 qui prolonge vers l'avant l'embase 8.

L'ensemble des articulations 9, 13, 14 et 16 constitue sensiblement un parallélogramme articulé destiné à maintenir la coulisse 12 sensiblement horizontale. Toutefois la tringle 15 comporte un manchon à ressort 18 lui conférant une légère élasticité dans le sens longitudinal pour permettre les mouvements obliques tel que représenté sur la figure 1 et en même temps une certaine adaptation du mécanisme 11 à la direction du plan formé par les deux lignes 5.

Le mécanisme 11 comporte d'autre part un axe vertical fixe 19, sensiblement à l'aplomb de la rotule 13, et deux axes mobiles 20 et 21 également verticaux et situés chacun à la partie supérieure d'un coulisseau, respectivement 22 et 23, susceptible de coulisser sur la coulisse 12. Sur l'axe 20 s'articulent deux bras moyens 24 en matière isolante disposés de part et d'autre de la coulisse 12. Sur l'axe fixe 19 s'articulent deux petits bras 25 de longueur sensiblement moitié et s'articulant chacun par son autre extrémité sensiblement au milieu 26 du bras moyen 24 correspondant. Enfin sur l'axe mobile 21 s'articulent deux grands bras 27 également en matière isolante s'articulant chacun par son autre extrémité en 28 à l'extrémité du bras moyen 24 correspondant.

La combinaison des petits bras 25 et des bras moyens 24, fait que les articulations 28 se déplacent symétriquement sensiblement selon la perpendiculaire à la coulisse 12.

La combinaison des bras moyens 24 et des grands bras 27, fait qu'un effort de rapprochement longitudinal excercé par un organe quelconque entre les coulisseaux 22 et 23 provoque un effet de rapprochement transversal l'une de l'autre des deux articulations 28. Enfin, l'ensemble du double quadrilatère isolant forme un bon appui stable pour s'appuyer et glisser sous les câbles 5. Par ailleurs un ressort de rappel 29 est disposé de manière à ouvrir l'angle entre les grands bras 27 afin d'assurer un écartement élastique entre les articulations 28.

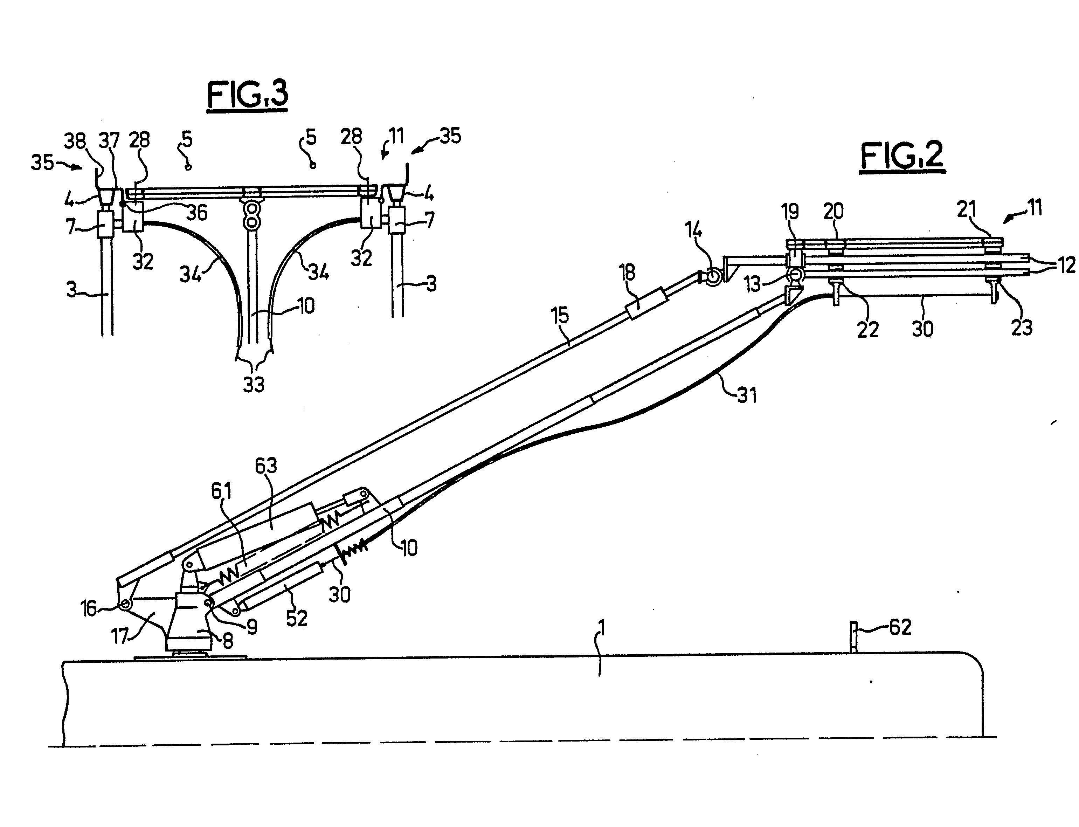

L'organe d'actionnement destiné à assurer le rapprochement relatif des coulisseaux 22 et 23 peut avantageusement être assuré par un câble 30 coulissant dans une gaine 31 comme représenté sur la figure 2, l'extrémité du câble se fixant sur 23 tandis que l'extrémité de la gaine 31 bute sur le coulisseau 22.

Le mécanisme de manoeuvre 11 se complète, comme illustré sur la figure 3, par deux dispositifs d'accouplement 32, qui sont positionnés sous l'ensemble du double parallèlogramme isolant et solidaire chacun d'un des axes verticaux 28.

Ces mécanismes d'accouplement 32 ont pour fonction de s'enclencher automatiquement sur les têtes de perches 7 par simple rapprochement latéral et de se déclencher uniquement sous l'effet d'une commande appropriée, qui peut également être avantageusement constituée par un câble 33 sous gaine 34.

En outre chacun de ces mécanismes d'accouplement 32 comporte une double antenne de détection de présence de câble 35 articulée en 36 sur le support du mécanisme 32 et comportant notamment deux parties horizontales 37, respectivement à l'avant et à l'arrière du sabot correspondant 4, et deux parties verticales 38, qui sont les seules parties faisant saillie au-dessus du plan supérieur 42 du double quadrilatère dont les parties 37 constituent le prolongement.

On a vu que les sabots 4 sont orientables au moins en direction à l'intérieur des embouts de tête de perche 7. Ceci s'obtient généralement à l'aide d'un axe traversant 39. Pour assurer l'orientation convenable du sabot 4, en même temps que se produit l'accouplement du mécanisme 32 avec la tête de perche correspondante, cet accouplement se fait par l'intermédiaire d'un ergot 40 solidaire en rotation de l'axe 39 du sabot 4 et calé perpendiculairement à la direction de ce dernier.

Par ailleurs, lorsque cet ergot 40 est en position verrouillée dans le mécanisme 32, les bords supérieurs 41 du sabot de trolley 4 se trouvent au même niveau ou légèrement en dessous du plan 42 limitant supérieurement le quadrilatère.

Les parties 37, comme on l'a vu, prolongent ce plan dans la position de repos des antennes 35, et les parties verticales 38, sont positionnées de telle manière que, lorsque le câble d'alimentation 5, non représenté sur les figures 2, 4 et 5, vient en butée contre cette partie 38, il se trouve à l'aplomb de la gorge 43 du sabot 4 destinée à le recevoir, gorge qui est généralement garnie de graphite pour assurer un bon glissement et une bonne conductibilité électrique.

9

Le mécanisme de verrouillage entre l'axe 39 ou son ergot 40 et le mécanisme 32 peut revêtir d'innombrables formes et utiliser tous les moyens d'accouplement connus.

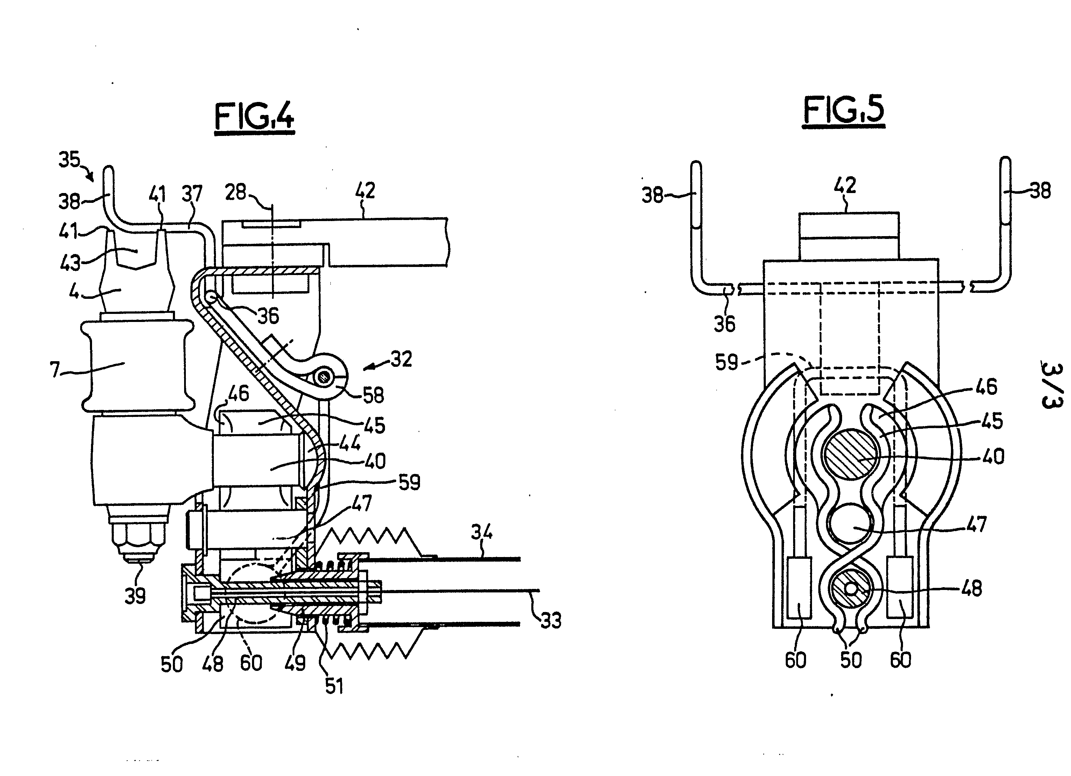

A titre d'exemple, comme représenté sur les figures 4 et 5, l'ergot 40 peut comporter une tête 44, et le mécanisme 32 consister en une pince dont les deux machoires 45 comportent une entrée évasée 46, au moins du côté de l'entrée, ces deux mâchoires 45 pivotant autour d'un axe 47 et comportant un ressort de rappel non représenté qui referme la pince. Le simple rapprochement dans le sens de son axe de l'ergot 40 produit donc l'enclenchement automatique.

Pour assurer le déverrouillage, on peut avantageusement utiliser, comme exposé plus haut, un mécanisme à câble 33 sous gaine 34.

Toutefois le câble et la gaine étant généralement conducteurs, il convient d'assurer une isolation convenable à ce niveau. Pour cela l'extrémité du câble 33 vient se fixer dans le corps du mécanisme 32 par l'intermédiaire d'un embout isolant 48 autour duquel coulisse une douille conique isolante 49 qui fait office de came en écartant les branches inférieures 50 de la pince lorsque cette douille pénètre entre ces branches sous l'effet conjugué de la traction du câble 33 et de la poussée de la gaine 34 sur la douille. Un ressort de rappel 51 également isolé par cette douille assure le mouvement inverse.

Pour assurer la commande des deux câbles 33 correspondant aux deux mécanismes d'accouplement 32, ainsi que du câble 30 qui provoque l'extension latérale du quadrilatère, on peut avantageusement utiliser un vérin unique 52, par exemple à air comprimé, disposé comme représenté sur les figures 1 et 2.

Pour cela, les extrémités inférieures des deux gaines 34 contenant les câbles 33 viennent en bûtée sur des pièces d'arrêt 54 solidaires de la perche de manoeuvre 10, et les extrémités correspondantes des câbles 33 sont fixées aux deux extrémités d'un petit palonnier 55 dont le centre sert de bûtée pour l'extrémité inférieure de la gaine 31 contenant le câble 30. Ce dernier traverse le palonnier et vient s'attacher à l'extrémité du vérin 52 travaillant en traction. Lorsqu'on actionne ce vérin 52, les trois câbles se trouvent tendus en même temps, mais le câble 30 agit d'abord sur la rétraction latérale du quadrilatère isolant par action sur les coulisseaux 22 et 23 avant que les câbles 33 produisent l'ouverture des pinces 45.

Il suffit pour que cet ordre d'opérations soit respecté que les ressorts 51, ainsi que les ressorts de rappel de fermeture des pinces 45, soient tarés à une valeur assez élevée pour que la résistance opposée soit plus élevée que celle offerte par la déformation du quadrilatère.

En outre, on peut ajouter un ressort supplémentaire 56 autour du câble 30, entre le palonnier 55 et une troisième partie fixe 57.

De cette manière, en effet, l'actionnement du vérin 52 provoque d'abord la rétraction du quadrilatère jusqu'à ce que les deux parties verticales 38 des antennes 35 de chacun des deux dispositifs d'accouplement 32 soient venues en bûtée depuis l'extérieur sur les deux lignes 5.

A ce moment là seulement le quadrilatère ne pouvant plus se déformer, la résistance augmente et permet alors au palonnier 55, de tirer les deux câbles 33 et de provoquer l'ouverture des pinces, à un moment où par conséquent chacun des câbles 5 se trouve dans la gorge 43 correspondante.

Par précaution on prévoit, conformément à l'invention, un dispositif de verrouillage de sécurité qui empêche l'ouverture des pinces 45 tant que le câble 5 n'est pas en position dans sa gorge.

On utilise pour cela le basculement des antennes 35 autour de l'axe 36 pour entraîner par cet axe un levier 58 à l'extrémité duquel s'articule un étrier 59 dont les deux branches se terminent par des cales 60 interposées au niveau de la douille 48 de part et d'autre des parties correspondantes de la pince entre celles-ci et la partie fixe du mécanisme 32.

De cette manière on n'a pas à craindre une libération intempestive des perches, l'ouverture de chacune des pinces n'étant possible que lorsque les cales 60 ont été élevées au niveau de l'axe 47, c'est-à-dire lorsque les antennes 35 ont été basculées vers le bas par la présence du câble 5.

Bien entendu, on prévoit un ressort de rappel de l'ensemble basculant dans sa position de repos, mais avec un tarage relativement léger pour qu'au niveau de la gorge 43 il corresponde sur les antennes un effort vertical réduit et en tout cas inférieur à la moitié de l'effort réduit d'application de l'ensemble des trois perches sous les fils 5.

On a vu que normalement chacune des perches de captage 3 excerce sous le fil un effort d'application important de l'ordre de 15 Kg. Lors de la manoeuvre d'emperchage, c'est-à-dire lors de l'élévation de l'ensemble des trois perches accouplées, il y a intérêt à ce que la manoeuvre soit ralentie et que l'effort global d'application soit par conséquent réduit.

Pour cela on dispose également sur la perche 10, comme sur les deux perches normales, un ressort de rappel 61, mais celui-ci se trouve détaré de manière à ne compenser qu'une fraction du poids de l'ensemble de la perche 6, de la tringle 15 et du mécanisme 11.

Ce tarage est déterminé de telle manière que, lorsque les trois perches sont accouplées, il subsiste un effort d'élévation réduit pour l'ensemble, alors qu'au contraire lorsque les perches sont désaccouplées de la manière qu'on vient de voir, la perche de manoeuvre 10 et les accessoires qu'elle porte descend tout naturellement par son propre poids, compensé seulement en partie, jusqu'à se poser sur une lyre de repos 62.

A titre d'indication, si l'écartement entre les fils de ligne 5 est d'environ 50 centimètres, on peut facilement prévoir le quadrilatère articulé de telle manière qu'il embrasse une largeur d'environ 1,2 mètre en position expansée. De cette manière, le positionnement de l'ensemble sous les fils ne requièrt aucune précision et peut être excécuté d'une

12

manière extrêmement simple, par exemple à l'aide d'un vérin à 5 ou à 7 positions actionnant en rotation l'embase 8, ou encore à l'aide d'un mécanisme quelconque simplifié de prépositionnement sans précision et dont en outre l'inertie ne joue aucun rôle.

Lorsque les deux perches de captage 3 ont été ramenées sur la lyre de repos 62 par leur propre vérin, et que le vérin 52 de la perche de manoeuvre, elle-même déjà en position de repos, a été relâchée, cela permet sous l'action du ressort 29 l'expansion du quadrilatère, et par conséquent l'accouplement automatique des deux têtes de perche 7 sur les deux dispositifs d'accouplement 32.

L'ensemble reste verrouillé sur le toit par un verrouillage approprié ou par des retours d'extrémité de la lyre de repos 62; et c'est dans cette position que le véhicule roule en fonctionnement autonome.

Lorsque le véhicule atteint la partie de son circuit comportant l'alimentation par trolley, le conducteur range son véhicule à un emplacement précis de la chaussée, et en fonction de cette position il commande le prépositionnement transversal approximatif comme exposé ci-dessus, en même temps qu'il produit la libération de l'ensemble des trois perches par le mécanisme de verrouillage approprié ou par rétraction momentanée du quadrilatère.

L'ensemble monte alors sous l'effort réduit exposé précédemment en étant fortement ralenti, de préférence à l'aide d'un amortisseur hydraulique ou d'un actuateur d'élévation 63, comme représenté sur la figure 2.

Le quadrilatère isolant à l'état déployé, comme représenté sur la figure 1, vient alors s'appuyer sous les fils de ligne 5, d'une manière plus ou moins centrée.

Le conducteur n'a plus alors qu'à actionner le vérin 52 pour assurer successivement la séquence des opérations exposées plus haut, c'est-à-dire le recentrage des antennes sur les fils 5, le contrôle de la présence des fils 5, dans les gorges des sabots, puis le deverrouillage des pinces et la libération des têtes de perches, étant entendu que dans ces conditions les perches restent en position sur les fils 5, grâce au tarage énergique de leur ressort, et c'est au contraire l'ensemble du mécanisme d'emperchage qui redescend sur le toit, ralenti également par l'amortissement propre de l'actuateur 63.

Comme exposé plus haut, le fait que le mécanisme d'emperchage revienne toujours en position de repos pendant la circulation du véhicule, assure que le fonctionnement des perches normales de captage 3, ait lieu d'une manière tout à fait habituelle et absolument pas perturbée par la présence du dispositif d'automatisme puisque la modification des perches inclut tout au plus l'addition des ergots 40, qui ne constituent qu'une masse négligeable. Ceci aussi bien lors du fonctionnement en circulation normale qu'en cas de déperchage accidentel entraînant la mise en action des rattrape-trolley.

Par ailleurs, si l'on désire adapter le mécanisme selon l'invention à diverses longueurs de perches, il est extrêmement facile, en conservant le mécanisme 11 dans son état, de modifier simplement également la longueur de la perche de manoeuvre 10, ainsi que les longueurs des trois câbles sous gaine ce qui est d'une extrême facilité.

De même, le mécanisme reste inchangé lorsqu'il y a variation du diamètre des perches, notamment dans le cas de trolley-bus articulés où les intensités de courant à capter sont plus élevées.

14     **0046562**

REVENDICATIONS

1. Dispositif d'emperchage automatique pour trolleybus, caractérisé par le fait qu'il comporte en combinaison deux perches de captage (3) du type classique utilisé pour l'emperchage manuel avec leurs accessoires (6), et une perche supplémentaire de manoeuvre (10) munie d'un mécanisme (11) lui permettant de positionner les perches de captage (3) sous les câbles conducteurs (5) puis de les libérer et de venir se placer dans une position d'attente.

2. Dispositif d'emperchage automatique pour trolleybus selon la revendication 1, dans lequel lesdites perches classiques comportent d'une manière usuelle chacune une embase pivotante (2) sur laquelle s'articule la base de la perche, avec ressort d'élévation et vérin d'abaissement, et à leur extrémité supérieure un embout de tête de perche (7) dans lequel pivote l'axe sensiblement vertical (39) d'un sabot de trolley (4) orientable, et de préférence oscillant, ladite tête de perche étant réunie par un cordage textile à un rattrape-trolley habituel (6) placé à l'arrière du véhicule, caractérisé par le fait que ladite perche supplémentaire de manoeuvre (10) est articulée sur une embase pivotante (8) disposée entre les deux embases (2) des perches de captage (3), cette perche de manoeuvre (10) comportant un ressort (61) détaré pour ne supporter qu'une faible fraction du poids de l'ensemble de la perche (10) et du mécanisme (11), et également ment un actuateur d'élévation (63), et à son extrémité supérieure une rotule (13) sur laquelle s'articule ledit mécanisme (11) qui comporte une coulisse (12) maintenue en position sensiblement horizontale grâce à une tringle de parallélisme (15) articulée sur l'embase (8) et sur l'extrémité avant (14) de la coulisse, ladite coulisse supportant un quadrilatère en matériau isolant de forme sensiblement plane pour venir s'appuyer sous les deux câbles conducteur de ligne (5) et déformable pour permettre de s'expanser tranversalement à la coulisse et de se rétracter, ce quadrilatère comportant à chacune de ses articulations latérales (28) un dispositif (32) d'accouplement automatique par simple rapprochement transversal avec une des têtes de perche (7), avec désaccouplement commandé au moyen d'une première commande appropriée (33, 34) avec en outre des antennes articulées (35) faisant saillie au-dessus du plan (42) du quadrilatère pour assurer le positionnement de la gorge (43) du sabot de trolley (4) à l'aplomb du câble (5) correspondant, le mécanisme se complètant par un actuateur approximatif d'orientation de l'embase de la perche de manoeuvre, et une deuxième commande appropriée (30,31) assurant la rétraction du quadrilatère dont l'expansion se produit sous l'effet d'un ressort de rappel, avec au moins un verin de manoeuvre pour lesdites premières commandes appropriées (33,34) et ladite deuxième commande appropriée (30,31).

3. Dispositif selon la revendication 2, caractérisé par le fait que ladite antenne (35) est basculante pour actionner un mécanisme de sécurité n'autorisant le désaccouplement, sous l'effet de ladite première commande appropriée, que lorsque l'antenne (35) est abaissée par le câble (5).

4. Dispositif selon une des revendication 2 et 3, caractérisé par le fait que ladite coulisse (12) comporte un axe vertical fixe (19) et deux axes verticaux mobiles (20,21) portés chacun par un coulisseau se déplaçant sur la coulisse, et que le quadrilatère déformable comporte deux bras moyens (24) articulés sur l'axe mobile (20) le plus proche de l'axe fixe (19), deux petits bras (25) articulés chacun sur l'axe fixe (19) et sensiblement au milieu (26) du bras moyen (24) correspondant, et deux grands bras (27) articulés chacun sur l'autre axe mobile (24) et sur l'extrémité du bras moyen (24) sur laquelle s'articule également (28) ledit dispositif d'accouplement, ladite deuxième de commande appropriée (30,31) provoquant la rétraction du quadrilatère étant disposée pour agir dans le sens d'une traction s'exerçant entre les deux coulisseaux (22,23).

5. Dispositif selon la revendition 4, caractérisé par le fait que chacun des deux premiers moyens de commande de désaccouplement des moyens d'accouplement (32) est constitué par un câble (33) sous gaine (34), que ledit deuxième moyen de commande approprié exerçant l'effort relatif de traction entre les deux coulisseaux (22,23) est constitué également par un câble (30) sous gaine (31), que du côté.de la base de la perche de manoeuvre (10), les extrémités inférieures des deux gaines (34) du premier moyen de commande sont en bûtée sur des pièces d'arrêt (54) fixes par rapport à la perche, tandis que les câbles (33) correspondants sont fixés aux extrémités d'un petit palonnier (55) dont le centre sert de bûtée pour l'extrémité inférieure de la gaine (31) correspondant audit deuxième moyen de commande, dont le câble correspondant (30) traverse ce palonnier et se trouve actionné par un vérin de manoeuvre unique (52) pour produire la séquence des opérations de rapprochement des perches (3) jusqu'à ce que les antennes (35) viennent bûter sur les câbles (5) de ligne, puis de libération des perches (3) permettant le retour dudit mécanisme supplémentaire à sa position de repos.

6. Dispositif selon l'une quelconque des revendications précédentes caractérisée par le fait qu'au niveau des têtes de perches de captage, un ergot d'accouplement (40) est fixé à l'axe (39) d'orientation du sabot (4) de trolley, perpendiculairement à celui-ci, ledit ergot (40) coopérant avec ledit dispositif d'accouplement (32).

7. Dispositif selon la revendication 6, caractérisé par le fait que ledit dispositif d'accouplement (32) est constitué par une pince (45) dont l'entrée (46) est évasée pour permettre un enclenchement automatique dudit ergot (40), ladite pince comportant un ressort de rappel en position fermée et un organe de manoeuvre permettant son ouverture sous l'effet de ladite première commande appropriée (33,34).

8. Dispositif selon la revendication 5, caractérisé par le fait que ledit dispositif de sécurité commandé par l'antenne basculante (35) est consitué par un étrier (59) manoeuvrant deux cales (60) entre une position où ces cales, placées entre les parties renflées de la pince entourant l'organe de manoeuvre (49), et des parties fixes du support, empêchent l'ouverture de cette pince, et une autre position, située sensiblement au niveau de l'axe (47) d'articulation de la pince, et où l'ouverture se trouve autorisée.

9. Dispositif selon l'une quelconque des revendications précédentes caractérisée par le fait que ladite tringle de parallèlisme (15) est dotée d'une légère élasticité longitudinale.

FIG.1

1/3

0046562

FIG.3

FIG.2

0046562

FIG.4

FIG.5

3/3

0046562

# RAPPORT DE RECHERCHE EUROPEENNE

**0046562**

Office européen des brevets

Numéro de la demande

EP 81 10 6382

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| | FR - A - 2 252 931 (VOLVO)<br>* Page 1, lignes 1-12; 28-40; page 2, lignes 1-18, 31-37; page 3, lignes 20-34; page 5, lignes 27-40; page 7, lignes 14-40; figures 1,2,4 *<br><br>-- | 1,2 | B 60 L 5/16<br>5/36 |
| | FR - A - 935 715 (KOENIGSWARTER)<br>* Page 2, lignes 14-86; page 4, lignes 71-77; figure 11 *<br><br>-- | 1,4 | |
| | DE - C - 941 854 (KLEPEL)<br>* Page 2, lignes 22-27, 37-49; figure 1 *<br><br>-- | 1 | DOMAINES TECHNIQUES RECHERCHES (Int. Cl.³)<br><br>B 60 L 5/16<br>5/36<br>5/04<br>5/10<br>5/18<br>5/34 |
| | DE - B - 2 827 371 (DORNIER)<br>* Colonne 1, lignes 4-37, 60-68; colonne 2, lignes 1-65 *<br><br>-- | 1,3,5 | |
| E | EP - A - 0 026 147 (I.R.T.)<br>* Page 4, ligne 3 - page 5, ligne 17 *<br><br>---- | 1-3 | |

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 09-11-1981 | TIELEMANS |

OEB Form 1503.1  06.78